# EUROPEAN PATENT APPLICATION

(11) **EP 4 631 810 A1**
(43) Date of publication of application: **15.10.2025**
(21) Application number: 24914486.6
(22) Date of filing: 05.02.2024
(51) Int. Cl.: B60W 20/15, B60W 10/06

(54) **STALL CONTROL METHOD AND APPARATUS FOR HYBRID VEHICLE, COMPUTER DEVICE, AND STORAGE MEDIUM**

(30) Priority: 26.01.2024 CN 202410115862
(71) Applicant: Chongqing Changan Automobile Co., Ltd., Chongqing 400023 (CN)
(72) Inventor: HE, Xinxiang, Chongqing 400023 (CN); HU, Xianli, Chongqing 400023 (CN); WANG, Xuan, Chongqing 400023 (CN)
(74) Representative: Keller Schneider Patent- und Markenanwälte AG
(86) International application number: PCT/CN2024/076085
(87) International publication number: WO 2025/156327

(57) **Abstract**

The present application provides a stall control method and apparatus for a hybrid vehicle, a computer device, and a storage medium. The method comprises: acquiring first power demand parameters of a target vehicle during the current driving process and a first discharge power boundary of a battery in the target vehicle; if it is determined, based on the first power demand parameters and the first discharge power boundary, that the target vehicle currently has a stall risk, starting an engine of the target vehicle and monitoring whether the engine power reaches a target power; if the target power is reached, acquiring second power demand parameters of the target vehicle and a second discharge power boundary of the battery; and controlling the engine to shut down according to the second discharge power boundary and the second power demand parameters. The present application solves the problem of vehicle stall when the battery discharge power boundary drops rapidly while the vehicle is in a pure electric mode and under steady throttle conditions.

## Description

### Technical Field

The present application relates to the field of vehicle power control, in particular to a stall control method and apparatus for a hybrid vehicle, a computer device, and a storage medium.

### Background

With an increasing awareness of environmental protection and the continuous development of new energy vehicle technologies, hybrid electric vehicles, as environmentally friendly vehicles that can be powered by both fuel and electricity, have been widely applied. In hybrid electric vehicles, how to achieve smooth switching between a pure electric mode and a hybrid mode while ensuring driving comfort and safety is an issue that needs to be addressed urgently.

In the prior art, the control method for starting an engine due to power demand when a hybrid electric vehicle is in a pure electric mode mainly focuses on how to improve driving smoothness. For example, by starting the engine in advance and reserving a certain amount of power for starting the engine, the wheel-end driving power does not change due to the start of the engine. This method improves the driving smoothness to a certain extent, without considering the risk of vehicle stall when the battery discharge power boundary drops rapidly while the vehicle is in a pure electric mode and under steady throttle conditions.

### Summary of the Invention

In view of this, embodiments of the present application provide a stall control method and apparatus for a hybrid vehicle, a computer device, and a storage medium, to solve the problem of vehicle stall when the battery discharge power boundary drops rapidly while the vehicle is in a pure electric mode and under steady throttle conditions.

In a first aspect, embodiments of the present application provide a stall control method for a hybrid vehicle, and the method includes:
acquiring first power demand parameters of a target vehicle during the current driving process and a first discharge power boundary of a battery in the target vehicle;
if it is determined, based on the first power demand parameters and the first discharge power boundary, that the target vehicle currently has a stall risk, starting an engine of the target vehicle and monitoring whether the engine power reaches a target power;
if the target power is reached, acquiring second power demand parameters of the target vehicle and a second discharge power boundary of the battery; and
controlling the engine to shut down according to the second discharge power boundary and the second power demand parameters.

Optionally, the step of acquiring first power demand parameters of a target vehicle during the current driving process includes:
detecting the current speed and gradient of the target vehicle;
querying a corresponding first cruising power in a preset data table based on the speed and the gradient;
acquiring the current first accessory power, first loss power, and first start-related power of the target vehicle; and
taking the first cruising power, the first accessory power, the first loss power, and the first start-related power as the first power demand parameters of the target vehicle.

Optionally, before determining that the target vehicle currently has a stall risk based on the first power demand parameters and the first discharge power boundary, the method further includes:
summing the first cruising power, the first accessory power, the first loss power, and the first start-related power to obtain a first power;
comparing the first power with the first discharge power boundary;
if the first power is greater than or equal to the first discharge power boundary, calculating the driving demand power of the target vehicle;
calculating the power difference between the first discharge power boundary and the leading power, and comparing the driving demand power with the power difference; and
if the driving demand power is greater than or equal to the power difference, determining that the target vehicle has a stall risk.

Optionally, the step of calculating the driving demand power of the target vehicle includes:
detecting operating conditions of the target vehicle, wherein the operating conditions include at least any one of the following: throttle opening, speed, gradient, and driving mode; and
calculating the driving demand power of the target vehicle based on the operating conditions.

Optionally, the step of starting the engine of the target vehicle and monitoring whether the engine power reaches the target power includes:
generating an engine start instruction;
controlling the engine to start according to the engine start instruction, calculating the difference between the first power and the first discharge power boundary, and taking the difference as the target power; and
monitoring whether the engine power reaches the target power.

Optionally, the step of acquiring the second power demand parameters of the target vehicle includes:
acquiring second cruising power, second accessory power, second loss power, second start-related power, and interval power of the target vehicle; and
taking the second cruising power, the second accessory power, the second loss power, the second start-related power, and the interval power as the second power demand parameters.

Optionally, the step of controlling the engine to shut down according to the second discharge power boundary and the second power demand parameters includes:
summing the second cruising power, the second accessory power, the second loss power, the second start-related power, and the interval power to obtain a second power;
comparing the second power with the second discharge power boundary;
if the second discharge power boundary is greater than or equal to the second power, performing a timing operation to obtain a duration; and
comparing the duration with a preset threshold, and if the duration is greater than the preset threshold, controlling the engine of the target vehicle to shut down.

In a second aspect, embodiments of the present application provide a stall control apparatus for a hybrid vehicle, and the apparatus includes:
a first acquisition module configured to acquire first power demand parameters of a target vehicle during the current driving process and a first discharge power boundary of a battery in the target vehicle;
a determination module configured to: if it is determined, based on the first power demand parameters and the first discharge power boundary, that the target vehicle currently has a stall risk, start an engine of the target vehicle and monitor whether the engine power reaches a target power;
a second acquisition module configured to acquire the second power demand parameters of the target vehicle and the second discharge power boundary of the battery if the target power is reached; and
a control module configured to control the engine to shut down according to the second discharge power boundary and the second power demand parameters.

In a third aspect, embodiments of the present application provide a computer device, including: a memory and a processor, wherein the memory and the processor are communicatively connected to each other, computer instructions are stored in the memory, and the processor performs the method according to the first aspect or any corresponding implementation manner described above by executing computer instructions.

In a fourth aspect, embodiments of the present application provide a computer-readable storage medium. The computer-readable storage medium stores computer instructions, and the computer instructions are configured to enable a computer to perform the method according to the first aspect or any corresponding implementation manner described above.

The method provided in the embodiments of the present application has the following beneficial effects:
In the method provided in the embodiments of the present application, through acquiring the first power demand parameters, the control system can more accurately understand actual needs of the vehicle and adjust the operating state of the engine according to these needs. Understanding the first discharge power boundary of the battery in the target vehicle helps to evaluate the power supply capacity of the battery and the power output limit under specific conditions. By comparing the power demand parameters with the discharge power boundary of the battery, whether there is a stall risk can be judged, such that corresponding preventive measures can be taken in advance. Through real-time monitoring and evaluation of the power demand parameters, the vehicle can better cope with various driving conditions, thereby being beneficial to improving the safety performance of the vehicle and reducing potential accident risks caused by insufficient power or sudden stall.

In the method provided in the embodiments of the present application, through starting the engine and monitoring whether its power reaches a target power when the vehicle faces a stall risk, the vehicle can obtain sufficient power support and maintain a stable driving state. By comparing the first power demand parameters with the first discharge power boundary, the control system can more accurately evaluate the power supply capacity of the battery. Starting the engine and monitoring its power can better balance the energy consumption of the battery and the energy supplement of the engine, thereby achieving more efficient energy management. When the vehicle faces a stall risk, timely starting the engine and monitoring whether its power reaches the target power can reduce the sense of jerk and instability caused by insufficient power.

In the method provided in the embodiments of the present application, through acquiring the second power demand parameters and the second discharge power boundary, the control system can more accurately understand the power demand of the vehicle and the power supply capacity of the battery, timely perceive changes in the power demand and the discharge power boundary, and adjust the control strategy of the engine in real time. By monitoring and adjusting the power demand of the vehicle and the battery discharge power boundary in real time, a smoother and more stable driving experience can be provided, and a sense of jerk caused by insufficient power or mismatched energy supply can be reduced.

In the method provided in the embodiments of the present application, through reasonably controlling the operating time and shutdown time of the engine, unnecessary energy consumption can be reduced, thereby improving energy utilization efficiency. Frequent starting and shutdown of the engine may cause unnecessary abrasion on the engine. By reasonably controlling the operating and shutdown time of the engine, the service life of the engine can be prolonged. Through intelligent management of the operation and shutdown of the engine, the energy demand of the vehicle and the power supply capacity of the battery can be better matched, thereby improving the operating efficiency of the vehicle.

### Brief Description of the Drawings

In order to more clearly illustrate the technical solutions in the specific embodiments of the present application or in the prior art, the accompanying drawings that need to be used in the description of the specific embodiments or in the prior art will be briefly introduced below. Obviously, the drawings in the following description are some embodiments of the present application. Those skilled in the art can obtain other drawings according to these drawings without any creative effort.
Fig. 1 is a flow chart of a stall control method for a hybrid vehicle according to some embodiments of the present application;
Fig. 2 is a flow chart of another stall control method for a hybrid vehicle according to some embodiments of the present application;
Fig. 3 is a structural block diagram of a stall control apparatus for a hybrid vehicle according to an embodiment of the present application;
Fig. 4 is a schematic diagram of a hardware structure of the computer device according to an embodiment of the present application.

### Detailed Description of the Embodiments

To make the objectives, technical solutions, and advantages of the embodiments of the present application clearer, the technical solutions in the embodiments of the present application will be clearly and completely described with reference to the accompanying drawings in the embodiments of the present application. Obviously, the described embodiments are part but not all of the embodiments of the present application. Based on the embodiments in the present application, all the other embodiments obtained by those skilled in the art without any creative effort shall all fall within the protection scope of the present application.

According to the embodiments of the present application, a stall control method and apparatus for a hybrid vehicle, a computer device, and a storage medium are provided. It should be noted that the steps shown in the flow charts of the accompanying drawings can be executed in a computer system such as a set of computer-executable instructions. Moreover, although a logical order is shown in the flow charts, in some cases, the steps shown or described may be executed in an order different from the steps herein.

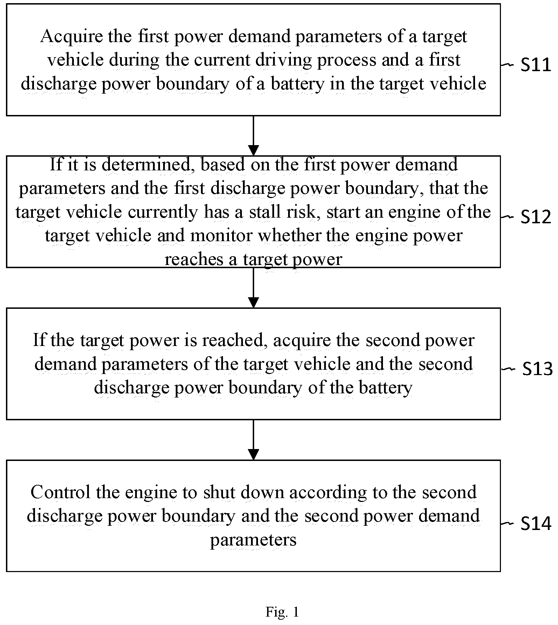

This embodiment provides a stall control method for a hybrid vehicle. Fig. 1 is a flow chart of a stall control method for a hybrid vehicle according to an embodiment of the present application. As shown in Fig. 1, the process includes the following steps:
Step S11: acquiring first power demand parameters of a target vehicle during the current driving process and a first discharge power boundary of a battery in the target vehicle.

It should be noted that before acquiring the first power demand parameters and the first discharge power boundary, information such as the current driving mode and engine status of the current target vehicle needs to be determined. Through admission confirmation, it is ensured that the subsequent control method will not be executed in an unstable or abnormal state, thereby improving the effectiveness and safety of the control. That is, admission confirmation needs to be performed on this control method, including but not limited to confirming that the current driving mode is pure electric priority, the driving mode is economic mode, the engine is shut down, the engine has no faults, and there is no higher-priority shutdown demand. Specifically, the confirmation of the current driving mode includes: a pure electric priority mode: in this mode, the vehicle preferentially uses the battery power to drive, and the engine will only start when the battery power is low or more power is needed; an economic mode: in this mode, the vehicle will optimize the use of fuel and electricity to achieve higher fuel economy; and other modes: the other modes may also include a sport mode and an off-road mode, and these modes will affect the power performance and fuel consumption of the vehicle. The confirmation of the engine status includes: engine shutdown: the engine is not operating currently; no engine faults: ensuring that the engine is in a normal working state without any faults or problems; and no higher demand for engine shutdown: determining that there are no other factors or system demands for engine shutdown, such as the cooling system, lubrication system, etc.

In the embodiments of the present application, the "first power demand parameters" and the "first discharge power boundary" can be regarded as pre-conditions for a decision. It is necessary to judge whether the current target vehicle has a stall risk, whether the engine needs to be started, and how to adjust the operating state of the engine to ensure normal operation of the vehicle according to the relationship between the first power demand parameters and the first discharge power boundary.

Specifically, the first power demand parameters include: target cruising power, accessory power, system loss power, and start-related power (start reserve power, start leading power), wherein the target cruising power is the power required by the vehicle to maintain the current speed in a stable driving state; the accessory power is the additional power required by vehicle accessories, including PTC heating power, air conditioning compressor refrigeration power, high-voltage to low-voltage power, etc.; the system loss power is the power loss of a drive motor and a generator, etc. Since the efficiency of the system inside a vehicle is not 100%, there will be a certain amount of power loss during the transmission and conversion process; the start reserve power is the power reserved for the start of the engine in the pure electric state, such that the start power will not affect the driving power to ensure smooth start; the start leading power can be preset according to the actual vehicle stall feeling leading amount to compensate for the time required to build power after the engine starts. The first discharge power boundary is used to characterize the maximum discharge power that the battery can provide. This is determined by the physical characteristics, health status, and current state (such as temperature, remaining power) of the battery. This boundary represents the maximum amount of electricity that the battery can safely and effectively discharge under the current conditions.

In the embodiments of the present application, the step of acquiring the first power demand parameters of the target vehicle during the current driving process includes the following steps A1 to A4:
Step A1: detecting the current speed and gradient of the target vehicle.

In the embodiments of the present application, the speed is one of the main factors determining the power required by a vehicle. By detecting the current speed, the driving demands and status of the vehicle can be understood. A vehicle speed sensor can be configured to detect the actual speed of the vehicle. The sensor sends the detected speed signal to the control system, and the control system then makes corresponding judgments based on these signals. The magnitude of the gradient directly affects the driving resistance of the vehicle, and further affects the required power. The power demands are different when the vehicle goes uphill and downhill. Gradient detection can be estimated using a chassis sensor of a vehicle or through GPS data. The chassis sensor can detect the angle change between the vehicle and the ground, while the GPS data can provide information about terrain and road gradient.

Step A2: querying a corresponding first cruising power in a preset data table based on the speed and gradient.

In the embodiments of the present application, a suitable cruising power is queried and determined according to the actual operating conditions (speed and gradient) of the vehicle. The cruising power refers to the power required for a vehicle to maintain a stable driving state. As query conditions, speed and gradient are key factors affecting the driving resistance and required power of the vehicle. Different combinations of speed and gradient will result in different power demands. For example, the power demands for high-speed driving on a flat road are different from the power demands for low-speed driving on a winding mountain road. The preset data table is a database or table that stores the relationships between various combinations of speed and gradient and the corresponding cruising power. The preset data table is compiled in advance according to experimental or actual test data. When the system detects a specific combination of speed and gradient, the system can search for the corresponding cruising power in the data table. The found cruising power is the first cruising power, and represents the power required for the vehicle to maintain stable driving under the current driving conditions.

Step A3: acquiring the current first accessory power, first loss power, and first start-related power of the target vehicle.

In the embodiments of the present application, the purpose of acquiring the current first accessory power, first loss power, and first start-related power of the target vehicle is to calculate the actual power demand during the current driving process of the vehicle and further evaluate whether there is a stall risk. The following is a detailed explanation of these three types of power: first accessory power: some accessories in the vehicle, such as air conditioners, audio systems, and lights, will consume a certain amount of power during operation. The first accessory power refers to the total power consumption of these accessories in the current working state. For example, if the air conditioner of the vehicle is operating at full capacity, its power consumption may increase significantly. First loss power: during the operation of the motor and the generator, there will be a certain amount of power loss. The first loss power refers to the power of these losses, that is, the difference between the power actually transmitted to the wheels and the electrical power generated by the generator. These losses may be caused by various factors, such as the resistance and magnetic resistance of the motor. First start-related power: it includes the first start reserve power and the first start leading power; and when the engine starts, in order to ensure that it can smoothly and quickly reach the expected power, additional start power may be required.

Step A4: taking the first cruising power, the first accessory power, the first loss power, and the first start-related power as the first power demand parameters of the target vehicle.

In the embodiments of the present application, taking the first cruising power, the first accessory power, the first loss power, and the first start-related power as the first power demand parameter can provide a more complete picture of the current status and demands of the vehicle, thereby not only being beneficial to preventing the risk of stalling, but also being beneficial to optimizing the control strategy of the engine, improving fuel economy, and ensuring driving smoothness and comfort. Through these parameters, the control system can better adjust the operating state of the engine, so as to meet the actual power demand of the vehicle and maximize efficiency and performance.

In the method provided in the embodiments of the present application, through acquiring the first power demand parameters, the control system can more accurately understand actual needs of the vehicle and adjust the operating state of the engine according to these needs. Understanding the first discharge power boundary of the battery in the target vehicle helps to evaluate the power supply capacity of the battery and the power output limit under specific conditions. By comparing the power demand parameters with the discharge power boundary of the battery, whether there is a stall risk can be judged, such that corresponding preventive measures can be taken in advance. Through real-time monitoring and evaluation of the power demand parameters, the vehicle can better cope with various driving conditions, such as uphill, downhill, acceleration, deceleration, etc., thereby being beneficial to improving the safety performance of the vehicle and reducing the potential accident risks caused by insufficient power or sudden stall.

Step S12: if it is determined, based on the first power demand parameters and the first discharge power boundary, that the target vehicle currently has a stall risk, starting an engine of the target vehicle and monitoring whether the engine power reaches a target power.

In the embodiments of the present application, if the current battery discharge power boundary cannot meet the demands for the sum of the current cruising power, accessory power, system loss power, start reserve power, and start leading power, that is, if there is a risk of stalling, the engine of the target vehicle is started. At the same time, it is necessary to monitor whether the engine power reaches the target power to ensure stable and safe driving of the vehicle.

It should be noted that the conditions for judging whether the target vehicle currently has a stall risk may specifically include: condition 1: the first battery discharge power boundary is less than or equal to the sum of the first cruising power, the accessory power, the system loss power, the start reserve power and the start leading power; condition 2: the driving demand power is greater than or equal to the difference between the first battery discharge power boundary and the leading power.

In the embodiments of the present application, before determining that the target vehicle currently has a stall risk based on the first power demand parameters and the first discharge power boundary, the method further includes the following steps B1 to B5:
Step B1: summing the first cruising power, the first accessory power, the first loss power, and the first start-related power to obtain the first power.

As an example, assume that the current speed of the target vehicle is detected as 60 km/h and the gradient is 30%, then the corresponding first cruising power is queried in the preset data table based on the speed and gradient. When the speed is 60 km/h and the gradient is 30%, the first cruising power is 9 kilowatts. The current first accessory power, the first loss power, and the first start-related power of the target vehicle are acquired. Assume that these powers are 1 kilowatt, 0.5 kilowatt, and 1 kilowatt respectively, then the first cruising power, the first accessory power, the first loss power, and the first start-related power are summed to obtain the first power of the first power demand parameters: 9 kilowatts (first cruising power) + 1 kilowatt (first accessory power) + 0.5 kilowatt (first loss power) + 1 kilowatt (first start-related power) = 11.5 kilowatts.

Step B2: comparing the first power with the first discharge power boundary.

In the embodiments of the present application, comparing the first power with the first discharge power boundary is to evaluate whether the current power demand of the vehicle can be supported by the battery, so as to judge whether the condition 1 for stall risk judgment is met (the first battery discharge power boundary is less than or equal to the sum of the target cruising power, the accessory power, the system loss power, the start reserve power and the start leading power). The first power is compared with the first discharge power boundary and the relationship between the two is analyzed: if the first power is less than or equal to the first discharge power boundary, it indicates that the power output of the battery can meet the power demand of the vehicle, and there will be no stall risk; if the first power is greater than the first discharge power boundary, it indicates that the power output of the battery is insufficient to support the current power demand. In this case, there is a stall risk because the battery cannot provide enough energy to maintain normal driving of the vehicle. By comparing the first power with the first discharge power boundary, the power demand of the vehicle and the power supply capacity of the battery can be evaluated more accurately, and corresponding control strategies can be adopted.

Step B3: if the first power is greater than or equal to the first discharge power boundary, calculating the driving demand power of the target vehicle.

In the embodiments of the present application, if the first power is greater than or equal to the first discharge power boundary, then whether condition 2 for stall risk judgment is met is judged, and the driving demand power of the target vehicle is calculated. The driving demand power refers to the power required by the vehicle during driving, and is calculated according to conditions such as throttle opening, speed, gradient, and driving mode. The specific calculation method can be selected and adjusted according to the actual situation and vehicle characteristics, for example, assume that the throttle opening of the target vehicle is 50%, the speed is 80 km/h, the gradient is 0%, and the driving mode is an economic mode. According to these conditions, the driving demand power can be calculated using the corresponding mathematical model or empirical formula.

In the embodiments of the present application, the step of calculating the driving demand power of the target vehicle includes: detecting the operating condition of the target vehicle, wherein the operating condition includes at least any one of the following: throttle opening, speed, gradient, and driving mode; and calculating the driving demand power of the target vehicle based on the operating condition.

In the embodiments of the present application, the operating condition is an important factor affecting the power demand of the vehicle. In this embodiment, any of the following operating condition parameters are included: throttle opening, speed, gradient, and driving mode. These parameters are directly related to the power output and energy demand of the vehicle. Specifically, throttle opening: the larger the throttle opening, the higher the acceleration performance expected by the driver, and the greater the power demand of the vehicle. Speed: as the speed increases, the vehicle needs more energy to overcome air resistance and rolling resistance to maintain high-speed driving. Gradient: different gradients have an impact on the driving resistance of the vehicle. When a vehicle goes uphill, a greater driving force is required to maintain the speed; when a vehicle goes downhill, energy can be recovered by braking or shifting to a lower gear. Driving mode: different driving modes (such as economic mode, sport mode, etc.) will affect the power output and energy management strategy of the vehicle. For example, in the sport mode, power is provided more actively, while in the economic mode, more attention is paid to energy saving.

Step B4: calculating the power difference between the first discharge power boundary and the leading power, and comparing the driving demand power with the power difference.

It should be noted that after calculating the power difference between the first discharge power boundary and the leading power, comparing the power difference with the driving demand power is another method to evaluate the power demand of the vehicle and the power supply capacity of the battery, so as to judge whether condition 2 for stall risk judgment is met (the driving demand power is greater than or equal to the difference between the first battery discharge power boundary and the leading power). The leading power is a preset value used to compensate for the time required to build power after the engine starts. This value can be preset according to the leading amount of the actual vehicle stall feeling to maintain a smooth start.

In the embodiments of the present application, the power difference between the first discharge power boundary and the leading power is calculated, that is, the difference between the two. This difference represents the actual available power of the battery in the current state. The calculated driving demand power is compared with the power difference: if the driving demand power is less than the power difference, it indicates that the available power of the battery can meet the power demand of the vehicle. In this case, the vehicle can rely solely on the battery for power supply to maintain normal driving. If the driving demand power is greater than the power difference, it indicates that the available power of the battery is insufficient to support the current power demand. In this case, there is a risk of stalling because the battery cannot provide enough energy to maintain normal driving of the vehicle. At this time, the control system may need to adopt corresponding control strategies, such as starting the engine or performing energy recovery, to provide additional energy support.

Step B5: if the driving demand power is greater than or equal to the power difference, determining that the target vehicle has a stall risk.

As an example, assume that at a certain moment, the throttle opening of the target vehicle is 50%, the speed is 80 km/h, the gradient is 10%, and the driving mode is the economic mode. According to these parameters, the driving demand power is calculated as 10 kilowatts. Meanwhile, the first discharge power boundary is 8 kilowatts, and the leading power is 1 kilowatt. Therefore, the power difference is 7 kilowatts. By comparing the driving demand power with the power difference, it is found that the driving demand power is greater than the power difference, that is, 10 kilowatts is greater than 7 kilowatts. According to the above comparison result, it can be determined that the target vehicle has a stall risk. The control system needs to adopt corresponding control strategies to provide additional energy support to keep normal operation of the vehicle.

In the embodiments of the present application, the step of starting the engine of the target vehicle and monitoring whether the engine power reaches the target power includes the following steps C1 to C3:
Step C1: generating an engine start instruction.

In the embodiments of the present application, the engine start instruction is configured to instruct the engine to start working, wherein the start instruction can be sent to the engine through an electronic signal or relevant hardware devices.

Step C2: controlling the engine to start according to the engine start instruction, calculating the difference between the first power and the first discharge power boundary, and taking the difference as the target power.

In the embodiments of the present application, the start of the engine is controlled according to the generated start instruction. This process may involve the interaction between the starter motor and the engine to ensure that the engine can be started smoothly. After the engine is started, the control system will calculate the difference between the first power and the first discharge power boundary. This difference can be regarded as the target power, that is, the power level that the engine needs to reach. This difference is calculated according to the power demand of the vehicle and the power supply capacity of the battery, aiming to ensure that the vehicle can obtain sufficient power support under various operating conditions. For example, assume that the current throttle opening of the target vehicle is 70%, the speed is 50 km/h, the gradient is 5%, and the driving mode is the sport mode. According to these parameters, the first power is calculated as 15 kilowatts. Meanwhile, the first discharge power boundary is 10 kilowatts. Therefore, the difference between the first power and the first discharge power boundary is 5 kilowatts, and this difference can be taken as the target power.

Step C3: monitoring whether the engine power reaches the target power.

In the embodiments of the present application, whether the actual engine power reaches the target power is continuously monitored, and power output of the engine can be monitored in real time through the sensor and related hardware device. If the engine power reaches the target power, it indicates that the engine is working normally and can meet the power demands of the vehicle. In this case, the control system can continue to monitor the working state of the engine to ensure its stable operation. If the engine power fails to reach the target power, it indicates that there is some problem or limiting condition that prevents the engine from providing sufficient power. In this case, the control system needs to take corresponding measures to solve this problem, such as adjusting the parameters of the engine, checking the working state of relevant components, or adopting other appropriate control strategies.

In the method provided in the embodiments of the present application, through starting the engine and monitoring whether its power reaches a target power when the vehicle faces a stall risk, the vehicle can obtain sufficient power support and maintain a stable driving state. By comparing the first power demand parameters with the first discharge power boundary, the control system can more accurately evaluate the power supply capacity of the battery. Starting the engine and monitoring its power can better balance the energy consumption of the battery and the energy supplement of the engine, thereby achieving more efficient energy management. When the vehicle faces a stall risk, timely starting the engine and monitoring whether its power reaches the target power can reduce the sense of jerk and instability caused by insufficient power.

Step S13: if the target power is reached, acquiring the second power demand parameters of the target vehicle and the second discharge power boundary of the battery.

In the embodiments of the present application, after the engine of the target vehicle is started, if the engine power reaches the target power, the state parameters of the vehicle are monitored again to obtain the second power demand parameters. The second power demand parameters include: the second cruising power, the second accessory power, the second system loss power, the second start reserve power, the second start leading power, and the interval power. The changes in these parameters reflect the changes in the perception of the driver of the vehicle driving status or power demands.

In the embodiments of the present application, the process of acquiring the second power demand parameters of the target vehicle specifically includes: acquiring the second cruising power, the second accessory power, the second loss power, the second start-related power, and the interval power of the target vehicle; and taking the second cruising power, the second accessory power, the second loss power, the second start-related power, and the interval power as the second power demand parameters. Based on the current state and parameters of the battery, the discharge power boundary of the battery is recalculated, i.e., the second discharge power boundary. This boundary represents the maximum power output that the battery can provide in the current state. In the calculation process, factors such as the power, remaining energy, temperature of the battery and other relevant factors are considered.

In the method provided in the embodiments of the present application, through acquiring the second power demand parameters and the second discharge power boundary, the control system can more accurately understand the power demand of the vehicle and the power supply capacity of the battery, timely perceive changes in the power demand and the discharge power boundary, and adjust the control strategy of the engine in real time. By monitoring and adjusting the power demand of the vehicle and the battery discharge power boundary in real time, a smoother and more stable driving experience can be provided, and a sense of jerk caused by insufficient power or mismatched energy supply can be reduced.

Step S14: controlling the engine to shut down according to the second discharge power boundary and the second power demand parameters.

In the embodiments of the present application, the purpose of this step is to decide whether to shut down the engine based on the second discharge power boundary and the second power demand parameters. Firstly, a summation operation is performed on the second cruising power, the second accessory power, the second loss power, the second start-related power, and the interval power, and the summation result is the second power. Secondly, the calculated second power is compared with the second discharge power boundary. If the second discharge power boundary is greater than or equal to the second power, the timing operation is started, and a duration is recorded. Finally, the duration is compared with a preset threshold. If the duration exceeds the preset threshold, it is considered that the energy supply of the battery is insufficient to maintain the normal operation of the vehicle. Therefore, an instruction will be issued to shut down the engine.

In the embodiments of the present application, step S14 specifically includes the following steps D1 to D4:
Step D1: summing the second cruising power, the second accessory power, the second loss power, the second start-related power, and the interval power to obtain the second power.

In the embodiments of the present application, the second cruising power, the second accessory power, the second loss power, and the second start-related power are obtained by monitoring the state parameters of the vehicle again after the engine of the target vehicle is started and the engine power reaches the target power. The interval power is a preset value used to prevent the engine from starting and shutting down frequently. When the battery discharge power boundary cannot immediately return to a level that meets the cruising power demand, an interval power is set for smooth transition. This interval power allows the engine to continue operating for a short period of time to avoid frequent starting and shutting down, thereby imposing unnecessary burdens on the engine and the battery. By setting the interval power, unnecessary starting and shutting down of the engine are reduced while ensuring a stable energy supply. By summing these powers, a relatively accurate second power is obtained, representing the total energy demand of the vehicle under the current operating conditions. This second power value is used for subsequent comparison and decision-making to determine whether the engine needs to be shut down, thereby ensuring that the battery discharge power boundary can always meet the energy demand of the vehicle.

Step D2: comparing the second power with the second discharge power boundary.

In the embodiments of the present application, by comparing the actual power demand of the vehicle with the maximum power that the battery can provide, it can be judged whether the battery can meet the operating demands of the vehicle. If the second discharge power boundary is less than the second power, it indicates that the battery cannot meet the operating demands of the vehicle, and the engine needs to continue to increase the power. If the second discharge power boundary is greater than or equal to the second power, it indicates that the battery can currently meet the operating demands of the vehicle. It is necessary to further judge whether the duration for which the battery meets the operating demands satisfies the conditions. When the duration meets the conditions, it indicates that the battery discharge power boundary has recovered to a situation where the cruising power demand can be met, and the engine can be shut down.

Step D3: if the second discharge power boundary is greater than or equal to the second power, performing a timing operation to obtain the duration.

In the embodiments of the present application, when the second discharge power boundary is greater than or equal to the second power, a timing operation is performed to determine the duration. The purpose of the duration is to evaluate the length of time that the battery can meet the operating demands of the vehicle, indicating the length of time that the battery can maintain power supply while meeting the operating demands of the vehicle. This length of time is a relative time period used to evaluate whether the power supply capacity of the battery is sufficient to support the operation of the vehicle under specific working conditions. The duration also reflects the endurance capacity of the battery. If the battery can only meet the demands for a short period of time, the engine may start and shut down continuously. Therefore, after the second discharge power boundary is greater than or equal to the second power, it is necessary to further evaluate the time during which the operating demands are met.

Step D4: comparing the duration with the preset threshold, if the duration is greater than the preset threshold, controlling the engine of the target vehicle to shut down.

In the embodiments of the present application, the preset threshold is set based on the evaluation of battery performance and operating conditions of the vehicle. When the duration exceeds this threshold, it indicates that the discharge power boundary of the battery has recovered to a level that can meet the cruising power demands. By comparing the duration with the preset threshold, whether the battery can meet the operating demands of the vehicle for a long time can be judged. If the duration exceeds the threshold, the control system will decide to shut down the engine because the battery can currently provide sufficient energy support for the vehicle.

As an example, assume that the second discharge power boundary is 110 kilowatts, the second cruising power is 80 kilowatts, the second accessory power is 20 kilowatts, the second loss power is 10 kilowatts, the second start-related power is 5 kilowatts, and the interval power is 5 kilowatts. Firstly, the second power is calculated, that is, "the second power is equal to the sum of the second discharge power boundary, the second cruising power, the second accessory power, the second loss power, the second start-related power and the interval power". After summing, the second power is 80 + 20 + 10 + 5 + 5 = 120 kilowatts. Secondly, the second power is compared with the second discharge power boundary, and it is found that the second power (120 kilowatts) is greater than the second discharge power boundary (110 kilowatts). Since the second power is greater than or equal to the second discharge power boundary, timing is started, and the duration is 3 minutes. Finally, the duration is compared with the preset threshold. If the preset threshold is 2 minutes, the comparison result is that the duration (3 minutes) is greater than the preset threshold (2 minutes). Based on the above comparison result, the control system judges that the discharge power boundary of the battery has recovered to a level that can meet the cruising power demand, and therefore an instruction is issued to shut down the engine.

In addition, in the embodiments of the present application, the interval power can be dynamically set according to factors such as the working state of the engine, load changes, and environmental conditions. Specifically, firstly, the thresholds for different working states are determined according to the working characteristics and performance data of the engine. These thresholds can be the upper and lower limits or change rates of parameters such as rotational speed, temperature, and pressure. The working state parameters of the engine, such as rotational speed, temperature, and pressure, are monitored and recorded in real time. The current working state of the engine is judged according to the monitored working state parameters. The working state can be determined by comparing the current parameters with the preset thresholds. The load parameters of the engine, such as output power and torque, are monitored, and the degree and rate of load changes are recorded.

The new interval power value is calculated according to the working state and load change. The calculation process is as follows: the interval power is equal to the sum of the basic interval power, the working state adjustment parameter, the load change adjustment parameter and the environmental factor adjustment parameter. The basic interval power is a preset fixed value, representing the interval power under normal working conditions without considering other factors. The working state adjustment parameter: the corresponding adjustment parameter for the interval power is set according to the thresholds and setting rules of different working states. For example, if the engine is in a high-load state, a certain amount of interval power is increased; if the engine is in a low-load state, a certain amount of interval power is reduced. The load change adjustment parameter: the corresponding adjustment parameter for the interval power is set according to the degree and rate of load change. For example, if the load increases sharply, a certain amount of interval power is increased; if the load is stable or decreasing, a certain amount of interval power is reduced. Environmental factor adjustment parameter: the adjustment parameter corresponding to the interval power is set according to the changes in environmental conditions. For example, if the environmental temperature is high, a certain amount of interval power is increased; if the environmental temperature is low, a certain amount of interval power is reduced.

In the method provided in the embodiments of the present application, by reasonably controlling the operating time and shutdown time of the engine, unnecessary energy consumption can be reduced, thereby improving energy utilization efficiency. Frequent starting and shutdown of the engine may cause unnecessary abrasion on the engine. By reasonably controlling the operating and shutdown time of the engine, the service life of the engine can be prolonged. Through intelligent management of the operation and shutdown of the engine, the energy demand of the vehicle and the power supply capacity of the battery can be better matched, thereby improving the operating efficiency of the vehicle.

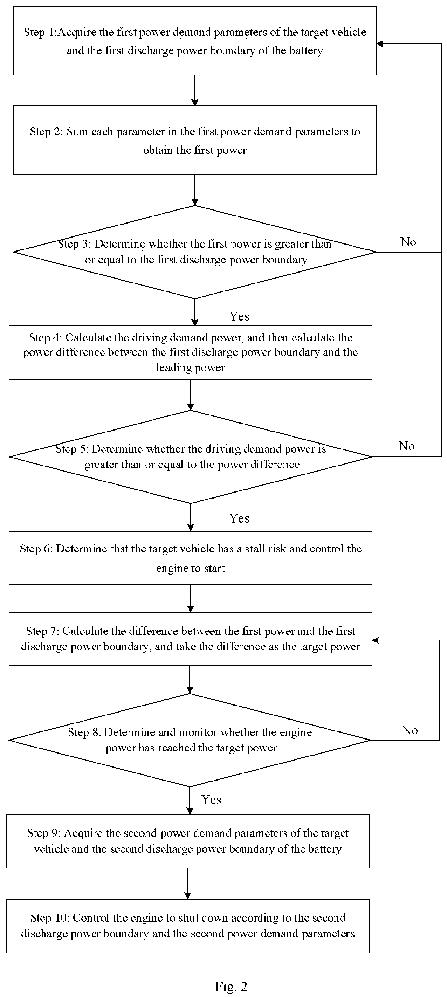

Fig. 2 is a flow chart of another stall control method for a hybrid vehicle according to an embodiment of the present application. As shown in Fig. 2, the method includes:
Step 1: acquiring the first power demand parameters of the target vehicle and the first discharge power boundary of the battery;
Step 2: summing each parameter in the first power demand parameters to obtain the first power;
Step 3: determining whether the first power is greater than or equal to the first discharge power boundary, if so, performing step 4; if not, performing step 1;
Step 4: calculating the driving demand power, and then calculating the power difference between the first discharge power boundary and the leading power;
Step 5: determining whether the driving demand power is greater than or equal to the power difference. If so, performing step 6; if not, performing step 1;
Step 6: determining that the target vehicle has a stall risk and controlling the engine to start;
Step 7: calculating the difference between the first power and the first discharge power boundary, and taking the difference as the target power;
Step 8: determining and monitoring whether the engine power has reached the target power, if so, performing step 9; if not, performing step 7;
Step 9: acquiring the second power demand parameters of the target vehicle and the second discharge power boundary of the battery; and
Step 10: controlling the engine to shut down according to the second discharge power boundary and the second power demand parameters.

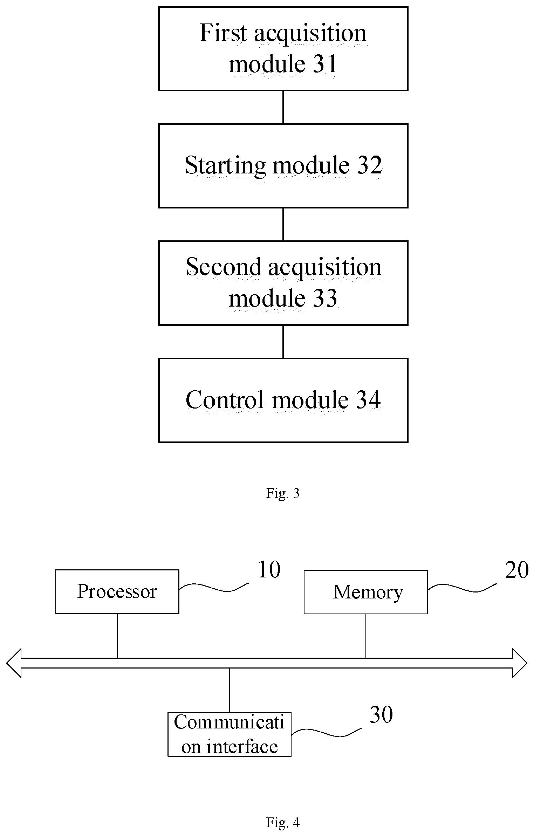

This embodiment provides a stall control apparatus for a hybrid vehicle. As shown in Fig. 3, the apparatus includes:
a first acquisition module 31 configured to acquire first power demand parameters of a target vehicle during the current driving process and a first discharge power boundary of a battery in the target vehicle;
a starting module 32 configured to start an engine of the target vehicle and monitor whether the engine power reaches a target power if it is determined, based on the first power demand parameters and the first discharge power boundary, that the target vehicle currently has a stall risk;
a second acquisition module 33 configured to acquire the second power demand parameters of the target vehicle and the second discharge power boundary of the battery if the target power is reached; and
a control module 34 configured to control the engine to shut down according to the second discharge power boundary and the second power demand parameters.

In the embodiments of the present application, the apparatus further includes: a determination module configured to: sum the first cruising power, the first accessory power, the first loss power, and the first start-related power to obtain the first power; compare the first power with the first discharge power boundary; if the first power is greater than or equal to the first discharge power boundary, calculate the driving demand power of the target vehicle; calculate the power difference between the first discharge power boundary and the leading power, and compare the driving demand power with the power difference; and if the driving demand power is greater than or equal to the power difference, determine that the target vehicle has a stall risk.

In the embodiments of the present application, the determination module is configured to detect the operating conditions of the target vehicle, wherein the operating conditions include at least any one of the following: throttle opening, speed, gradient, and driving mode; and the driving demand power of the target vehicle is calculated according to the operating conditions.

In the embodiments of the present application, the first acquisition module 31 is configured to detect the current speed and gradient of the target vehicle; query a corresponding first cruising power in a preset data table based on the speed and the gradient; acquire the current first accessory power, first loss power, and first start-related power of the target vehicle; and take the first cruising power, the first accessory power, the first loss power, and the first start-related power as the first power demand parameter of the target vehicle.

In the embodiments of the present application, the starting module 32 is configured to generate an engine start instruction; control the engine to start according to the engine start instruction, calculate the difference between the first power and the first discharge power boundary, and take the difference as the target power; and monitor whether the engine power reaches the target power.

In the embodiments of the present application, the second acquisition module 33 is configured to acquire second cruising power, second accessory power, second loss power, second start-related power, and interval power of the target vehicle; and take the second cruising power, the second accessory power, the second loss power, the second start-related power, and the interval power as the second power demand parameters.

In the embodiments of the present application, the control module 34 is configured to sum the second cruising power, the second accessory power, the second loss power, the second start-related power, and the interval power to obtain a second power; compare the second power with the second discharge power boundary; if the second discharge power boundary is greater than or equal to the second power, perform a timing operation to obtain a duration; compare the duration with a preset threshold, and if the duration is greater than the preset threshold, control the engine of the target vehicle to shut down.

Please refer to Fig. 4. Fig. 4 is a structural schematic diagram of a computer device provided by an optional embodiment of the present application. As shown in Fig. 4, the computer device includes: one or more processors 10, a memory 20, and interfaces for connecting various components, wherein the interfaces include high-speed interfaces and low-speed interfaces. Components communicate with each other using different buses and can be installed on a common motherboard or in other ways as needed. The processor can process instructions executed within the computer device, including instructions for graphical information stored in the memory or on the memory to display a GUI on an external input/output device (such as a display device coupled to the interface). In some optional implementations, a plurality of processors and/or a plurality of buses can be used together with a plurality of memories if necessary. Similarly, a plurality of computer devices can be connected, and each device provides part of the necessary operations (for example, as a server array, a group of blade servers, or a multi-processor system).

The processor 10 may be a central processing unit, a network processor, or a combination thereof. The processor 10 may further include a hardware chip. The above hardware chip may be an application-specific integrated circuit, a programmable logic device, or a combination thereof. The above programmable logic device may be a complex programmable logic device, a field-programmable gate array, a generic array logic, or any combination thereof.

Wherein, the memory 20 stores instructions executable by at least one processor 10, such that at least one processor 10 executes the methods shown in the above embodiments.

The memory 20 may include a program storage area and a data storage area. The program storage area can store an operating system and application programs required for at least one function. The data storage area can store data created according to the use of the computer device for presenting a mini-program landing page, etc. In addition, the memory 20 may include a high-speed random access memory, and may also include a non-transitory memory, such as at least a disk storage device, a flash memory device, or other non-transitory solid-state storage devices. In some optional embodiments, the memory 20 may optionally include memories remotely located relative to the processor 10, and these remote memories can be connected to the computer device via a network. Examples of the above network include, but are not limited to, the Internet, an intranet, a local area network, a mobile communication network, and combinations thereof.

The memory 20 may include a volatile memory, such as a random access memory; the memory may also include a non-volatile memory, such as a flash memory, a hard disk or a solid-state drive; and the memory 20 may also include a combination of the above types of memories.

The computer device further includes a communication interface 30 for communication between the computer device and other devices or communication networks.

The embodiments of the present application also provide a computer-readable storage medium. The method according to the embodiments of the present application can be implemented in hardware, firmware, or as computer codes that can be recorded on a storage medium, downloaded over a network, stored on a remote storage medium or a non-transitory machine-readable storage medium, and stored on a local storage medium. Therefore, the method described herein can be stored in such software processors on a storage medium using a general-purpose computer, a dedicated processor, or programmable or dedicated hardware. The storage medium can be a magnetic disk, an optical disk, a read-only memory, a random access memory, a flash memory, a hard disk, a solid-state drive, etc. Further, the storage medium can also include a combination of the above types of memories. It can be understood that a computer, a processor, a microprocessor controller, or programmable hardware includes a storage component that can store or receive software or computer codes. When the software or computer codes are accessed and executed by the computer, the processor, or the hardware, the method shown in the above embodiments is implemented.

Although the embodiments of the present application have been described with reference to the accompanying drawings, those skilled in the art can make various modifications and variations without departing from the spirit and scope of the present application. Such modifications and variations shall all fall within the scope defined by the appended claims.

## Claims

1. A stall control method for a hybrid vehicle, comprising:
acquiring first power demand parameters of a target vehicle during the current driving process and a first discharge power boundary of a battery in the target vehicle;
if it is determined, based on the first power demand parameters and the first discharge power boundary, that the target vehicle currently has a stall risk, starting an engine of the target vehicle and monitoring whether the engine power reaches a target power;
if the target power is reached, acquiring second power demand parameters of the target vehicle and a second discharge power boundary of the battery; and
controlling the engine to shut down according to the second discharge power boundary and the second power demand parameters.

2. The method according to claim 1, wherein the step of acquiring first power demand parameters of a target vehicle during the current driving process comprises:
detecting the current speed and gradient of the target vehicle;
querying a corresponding first cruising power in a preset data table based on the speed and the gradient;
acquiring the current first accessory power, first loss power, and first start-related power of the target vehicle; and
taking the first cruising power, the first accessory power, the first loss power, and the first start-related power as the first power demand parameters of the target vehicle.

3. The method according to claim 2, wherein before determining that the target vehicle currently has a stall risk based on the first power demand parameters and the first discharge power boundary, the method further comprises:
summing the first cruising power, the first accessory power, the first loss power, and the first start-related power to obtain a first power;
comparing the first power with the first discharge power boundary;
if the first power is greater than or equal to the first discharge power boundary, calculating the driving demand power of the target vehicle;
calculating the power difference between the first discharge power boundary and the leading power, and comparing the driving demand power with the power difference; and
if the driving demand power is greater than or equal to the power difference, determining that the target vehicle has a stall risk.

4. The method according to claim 3, wherein the step of calculating the driving demand power of the target vehicle comprises:
detecting operating conditions of the target vehicle, wherein the operating conditions include at least one of the following: throttle opening, speed, gradient, and driving mode; and
calculating the driving demand power of the target vehicle based on the operating conditions.

5. The method according to claim 3, wherein the step of starting the engine of the target vehicle and monitoring whether the engine power reaches the target power comprises:
generating an engine start instruction;
controlling the engine to start according to the engine start instruction, calculating the difference between the first power and the first discharge power boundary, and taking the difference as the target power; and
monitoring whether the engine power reaches the target power.

6. The method according to claim 1, wherein the step of acquiring the second power demand parameters of the target vehicle comprises:
acquiring second cruising power, second accessory power, second loss power, second start-related power, and interval power of the target vehicle; and
taking the second cruising power, the second accessory power, the second loss power, the second start-related power, and the interval power as the second power demand parameters.

7. The method according to claim 6, wherein the step of controlling the engine to shut down according to the second discharge power boundary and the second power demand parameters comprises:
summing the second cruising power, the second accessory power, the second loss power, the second start-related power, and the interval power to obtain a second power;
comparing the second power with the second discharge power boundary;
if the second discharge power boundary is greater than or equal to the second power, performing a timing operation to obtain a duration; and
comparing the duration with a preset threshold, and if the duration is greater than the preset threshold, controlling the engine of the target vehicle to shut down.

8. A stall control apparatus for a hybrid vehicle, wherein the apparatus comprises:
a first acquisition module, configured to acquire first power demand parameters of a target vehicle during the current driving process and a first discharge power boundary of a battery in the target vehicle;
a starting module, configured to start an engine of the target vehicle and monitor whether the engine power reaches a target power if it is determined, based on the first power demand parameters and the first discharge power boundary, that the target vehicle currently has a stall risk;
a second acquisition module, configured to acquire the second power demand parameters of the target vehicle and the second discharge power boundary of the battery if the target power is reached; and
a control module, configured to control the engine to shut down according to the second discharge power boundary and the second power demand parameters.

9. The apparatus according to claim 8, wherein the first acquisition module is configured to detect the current speed and gradient of the target vehicle; query a corresponding first cruising power in a preset data table based on the speed and the gradient; acquire the current first accessory power, first loss power, and first start-related power of the target vehicle; and take the first cruising power, the first accessory power, the first loss power, and the first start-related power as the first power demand parameters of the target vehicle.

10. The apparatus according to claim 9, further comprising: a determination module configured to sum the first cruising power, the first accessory power, the first loss power, and the first start-related power to obtain a first power; compare the first power with the first discharge power boundary; if the first power is greater than or equal to the first discharge power boundary, calculate the driving demand power of the target vehicle; calculate the power difference between the first discharge power boundary and the leading power, and compare the driving demand power with the power difference; and if the driving demand power is greater than or equal to the power difference, determine that the target vehicle has a stall risk.

11. The apparatus according to claim 10, wherein the determination module is configured to detect operating conditions of the target vehicle, wherein the operating conditions include at least any one of the following: throttle opening, speed, gradient, and driving mode; and calculate the driving demand power of the target vehicle based on the operating conditions.

12. The apparatus according to claim 10, wherein the starting module is configured to generate an engine start instruction; control the engine to start according to the engine start instruction, calculate the difference between the first power and the first discharge power boundary, and take the difference as the target power; and monitor whether the engine power reaches the target power.

13. The apparatus according to claim 8, wherein the second acquisition module is configured to acquire second cruising power, second accessory power, second loss power, second start-related power, and interval power of the target vehicle; and take the second cruising power, the second accessory power, the second loss power, the second start-related power, and the interval power as the second power demand parameters.

14. The apparatus according to claim 13, wherein the control module is configured to sum the second cruising power, the second accessory power, the second loss power, the second start-related power, and the interval power to obtain a second power; compare the second power with the second discharge power boundary; if the second discharge power boundary is greater than or equal to the second power, perform a timing operation to obtain a duration; compare the duration with a preset threshold, and if the duration is greater than the preset threshold, control the engine of the target vehicle to shut down.

15. A computer device, comprising:
a memory and a processor, wherein the memory and the processor are communicatively connected to each other, computer instructions are stored in the memory, and the processor executes the computer instructions to perform the method according to any one of claims 1 to 7.

16. A computer-readable storage medium, wherein the computer-readable storage medium stores computer instructions, and the computer instructions are configured to enable a computer to perform the method according to any one of claims 1 to 7.
